# EUROPÄISCHE PATENTANMELDUNG

(11) **EP 0 888 981 A1**
(43) Veröffentlichungstag der Anmeldung: **07.01.1999**
(21) Anmeldenummer: 98111794.8
(22) Anmeldetag: 26.06.1998
(51) Int. Cl.: B65D 88/66, A01K 5/02

(54) **Vorrichtung zum dosierten Zuführen von Schüttgut**

(30) Priorität: 04.07.1997 DE 19728749
(71) Anmelder: Urban, Helmut, 27798 Hude-Wüsting (DE)
(72) Erfinder: Heeren, Reinhard, 26434 Wangerland (DE)
(74) Vertreter: Winkler, Andreas, Dr.

(57) **Zusammenfassung**

Vorrichtung zum dosierten Zuführen von Schüttgut, bei der das Schüttgut durch Schwerkraftwirkung in den unteren Bereich eines trogförmigen Vorratsbehälters (2) gelangt und von dort mittels einer Förderschnecke (5) abgefördert wird. Die seitlichen Wandbereiche (4a,4b) des Vorratsbehälters (2) bestehen aus einem straff gespannten flexiblen Material und werden durch eine Schlageinrichtung (9) impulsartig angeregt um eine Brückenbildung der Schüttgüter zu vermeiden.

## Beschreibung

Die Erfindung betrifft ein Verfahren zum dosierten Zuführen von Schüttgut, insbesondere von pulverförmigem Futtermittel, bei dem innerhalb einer äußeren Begrenzungsfläche ein Vorratsvolumen von Schüttgut gebildet wird, wobei das Schüttgut durch Schwerkraftwirkung in den unteren Bereich des Vorratsvolumens gelangt und von dort abgefördert wird. Die Erfindung betrifft weiterhin eine entsprechende Vorrichtung zum dosierten Zuführen von Schüttgut, insbesondere einen Fütterungsautomaten für pulverförmiges Futter, mit einem Behälter zum Aufnehmen des Schüttguts und einer in einem unteren Bereich des Behälters angeordneten Fördereinrichtung zum dosierten Abgeben des Schüttguts, wobei das Schüttgut durch Schwerkraftwirkung in dem Bereich der Fördereinrichtung gelangt.

Fütterungsanlagen bzw. -automaten dienen dazu, die Fütterung von z.B. Kälbern und Ferkeln zu erleichtern, und zwar sowohl beim Anrühren als auch beim Ver- bzw. Zuteilen des üblicherweise aus mindestens einer pulverförmigen und einer flüssigen Komponente bestehenden Futters.

Bei der hier erforderlichen Speicherung und Dosierung des (pulverförmigen) Schüttguts treten häufig dahingehend Schwierigkeiten auf, daß das schlechte "Fließverhalten" des Schüttguts zu einem diskontinuierlichen Förderverhalten beim Dosiervorgang führt, was beispielsweise durch sogenannte Brückenbildung zustande kommen kann.

Die Aufgabe der Erfindung besteht darin, einen ununterbrochenen Förderstrom des Schüttguts und eine gleichmäßige Ausbringung bzw. Zudosierung unter Beibehaltung eines präzisen und reproduzierbaren Mischungsverhältnisses zu schaffen und damit die Möglichkeit geringer und dennoch gleichmäßig gemischter Anrührmengen zu realisieren.

In Bezug auf das Verfahren wird diese Aufgabe dadurch gelöst, daß zumindest ein Bereich der äußeren Begrenzungsfläche des Vorratsvolumens in zeitlichen Abständen stoß- oder impulsartig bewegt wird. Dadurch wird das Schüttgut ständig oder von Zeit zu Zeit während des Förderprozesses in einer Fließbewegung gehalten, was durch gezielt von außen einwirkende Kräfte auf zumindest einer flexibel und elastisch gestaltete Wand eines Vorratsbehälters hervorgerufen wird. Dies führt zu einem gleichmäßigen Nachlaufverhalten und verhindert eine Verharrung des Schüttguts und damit beispielsweise auch eine etwaige Brückenbildung im Schüttgut.

Bevorzugt werden zwei im wesentlichen gegenüberliegende Bereiche der äußeren Begrenzungsfläche des Vorratsvolumens in zeitlichen Abständen stoß- oder impulsartig bewegt.

Es kann vorgesehen sein, daß die äußeren Begrenzungsflächen trogförmig angeordnet ist und das Schüttgut am untersten Bereich des Vorratsvolumens abgefördert wird.

Bevorzugt haben die zeitlichen Abstände, mit denen die stoß- oder impulsartige Bewegung der äußeren Begrenzungsfläche des Vorratsvolumens erfolgt, eine Länge, die der Geschwindigkeit, mit der das Schüttgut abgefördert wird, umgekehrt proportional ist.

Dadurch wird gewährleistet, daß die Fließbewegung des Schüttguts näherungsweise der Geschwindigkeit der Abförderung entspricht.

Das Schüttgut kann in vertikaler Richtung oder auch in horizontaler Richtung abgefördert werden.

In Bezug auf die Vorrichtung wird die Aufgabe der Erfindung dadurch gelöst, daß zumindest ein Wandbereich des Behälters flexibel ausgebildet ist mit einer Schlageinrichtung und in zeitlichen Abständen stoß- oder impulsartig bewegt wird.

Vorzugsweise sind zwei im wesentlichen einander gegenüberliegende Wände des Behälters flexibel ausgebildet und werden in zeitlichen Abständen stoß- oder impulsartig bewegt.

Zweckmäßigerweise sind zwei im wesentlichen einander gegenüberliegende Wände des Behälters flexibel ausgebildet, und vorzugsweise besteht die wenigstens eine, flexibel ausgebildete Wand des Behältes aus textilem Material. Es kann auch vorgesehen sein, daß alle Wände des Behälters aus textilem Material bestehen. In diesem Fall kann der Behälter aus einer die Seitenwände bildenden, im wesentlichen rechtekigen Materialbahn und zwei die Stirnwände bildenden, im wesentlichen dreieckigen Materialbahnen zusammengefügt sein.

Es kann vorgesehen sein, däß die Fördereinrichtung eine in einem bereichsweise offenen Förderrohr angeordnete Förderspirale aufweist, die zweckmäßigerweise aus einem ebenen, spiralförmig gewickelten Metallband besteht.

Im abgabeseitigen Endabschnitt der Förderspirale kann ein feststehender Dosierdorn angeordnet sein, dessen Außendurchmesser dem Innendurchmesser der Förderspirale entspricht. Weiterhin kann der abgabeseitige Endabschnitt des Förderrohrs von einer Abgabetülle umschlossen sein.

Die Abgabetülle kann in Abförderrichtung eine Querschnittsverengung aufweisen, die so ausgebildet sein kann, däß der Abgangsquerschnitt der Abgabetülle um 5% bis 20% geringer ist als der Kreisringquerschnitt der Förderspirale, insbesondere im Bereich des Dosierdorns, sofern vorhanden.

Vorzugsweise ist ein Antriebsmotor sowohl zum Antrieb der Förderspirale als auch zum Antrieb der Schlageinrichtung bzw. zur Bewegung des zumindest einen flexiblen Wandbereichs des Behälters vorgesehen.

Die Bewegung des zumindest einen flexiblen Wandbereichs kann mittels eines Schlagelements erfolgen, welches in zeitlichen Abständen auf einen flexiblen Wandbereich des Behälters auftrifft.

Der Behälter kann trogförmig ausgebildet sein und zwei im wesentlichen senkrechte Stirnwände sowie zwei geneigte, flexible Seitenwände aufweisen. Das Schlagelement kann V-förmig ausgebildet sein und unterhalb des Behälters schwenkbar gelagert sein, so däß die beiden (ebenfalls V-förmig angeordneten) Seitenwände beaufschlagt werden.

In Ausgestaltung der Erfindung kann vorgesehen sein, daß der Antriebsmotor fliegend gelagert ist, wobei die Ausgangswelle des Motors parallel zur Achse der Fördereinrichtung angeordnet ist und über einen Kurbelzapfen exzentrisch mit der Fördereinrichtung verbunden ist, und der Motor über einen Gelenkarm mit dem Schlagelement verbunden ist.

Zweckmäßigerweise umschließen die den Behälter bildenden Materialbahnen die Endabschnitt des Förderrohrs der Förderspirale dicht. Bevorzugt sind die den Behälter bildenden Materialbahnen im eingebauten Zustand straff gespannt.

Weitere Vorteile und Merkmale der Erfindung ergeben sich aus der nachfolgenden Beschreibung eines Ausführungsbeispiels der Erfindung, wobei auf eine Zeichnung Bezug genommen wird, in der:
Fig. 1 eine schematisierte, perspektivische Ansicht einer erfindungsgemäßen Vorrichtung zum dosierten Zuführen von Schüttgut zeigt;
Fig. 2 eine Seitenansicht der Fördereinrichtung mit Antriebsmotor zeigt;
Fig. 3 eine Seitenansicht des Schlagelements zeigt;
Fig. 4 eine (halbe) Schnittansicht entlang Linie A-A in Fig. 3 zeigt;
Fig. 5 eine Vorderansicht auf den Schüttgutbehälter zeigt;
Fig. 6 eine Seitenansicht des Schüttgutbehälters zeigt;
Fig. 7 eine Draufsicht von unten auf den Schüttgutbehälter zeigt;
Fig. 8 und 10 Draufsichten auf Materialzuschnitte der Stirnseiten des Behälters zeigen; und
Fig. 9 eine Draufsicht auf einen Materialzuschnitt für die Seitenflächen des Behälters zeigt.

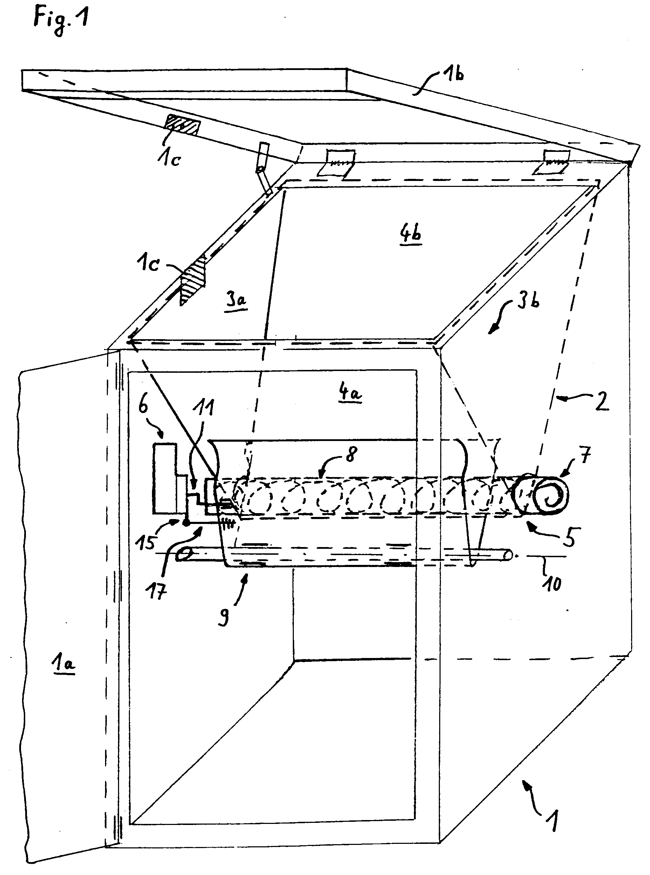

Zunächst sei auf Fig. 1 Bezug genommen, die eine schematisierte, perspektivische Ansicht einer erfindungsgemäßen Vorrichtung zeigt. Die eigentliche SchüttgutZuführungsvorrichtung befindet sich in einem Gehäuse 1, das im wesentlichen zur Halterung und Befestigung der wesentlichen Komponenten der Vorrichtung dient. Das Gehäuse kann in herkömmlicher Weise einen Metallrahmen mit Blechwänden aufweisen und ist mit einer zu Wartungszwecken o.ä. zu öffnenden Tür 1a und mit einer ebenfalls zu öffnenden Abdekung 1b versehen, wobei Sicherheitsschalter bzw. Sensoren 1c für ein Abschalten der Vorrichtung beim Öffnen der Tür oder Abdeckung sorgen.

Die im Inneren des Gehäuses 1 eingebaute Dosierungsvorrichtung besteht im wesentlichen aus vier Hauptkomponenten (Vorratsbehälter für Schüttgut, Förderungseinrichtung, Schlagelement und Antrieb), die nachfolgend im einzelnen erläutert werden.

Auszudosierendes Schüttgut wird bei geöffneter Abdeckung 1b in einen Behälter 2 eingefüllt, der aus textilem Material besteht und nachfolgend auch als Pulvertüte bezeichnet wird. Die Pulvertüte ist trogförmig bzw. im senkrechten Schnitt V-förmig ausgebildet und besteht im wesentlichen aus zwei dreieckförmigen Stirnwänden 3a und 3b sowei zwei schräg zueinander verlaufenden, im wesentlichen rechteckigen Seitenwänden 4a und 4b, wodurch ein Rinnen- bzw. trogförmiges Behältnis gebildet wird.

Die Wände 3a, 3b, 4a und 4b bestehen aus flexiblem, textilem Material und sind innerhalb des Gehäuses 1 straff gespannt.

Am tiefsten Punkt der Pulvertüte 2 ist eine Fördereinrichtung 5 angeordnet, die im wesentlichen aus einem im Bereich der Pulvertüte 2 nach oben hin offenen Rohr 7 mit einer sich darin drehenden Förderspirale 8 besteht, die durch einen Antrieb 6 in Drehung versetzt wird. Das abzugebende Schüttgut wird an der stirnseitigen Öffnung des Förderrohrs 7 (in Fig. 1 rechts) abgegeben.

Der Antrieb 6 wirkt weiterhin in noch zu erläutender Weise auf ein Schlagelement 9, das nachfolgend auch als Impulsblech bezeichnet wird und aus einem im wesentlichen V-förmigen Blechteil besteht, das unterhalb von Pulvertüte und Förderrohr 7 auf einer horizontalen Schwenkachse 10 beweglich gelagert ist.

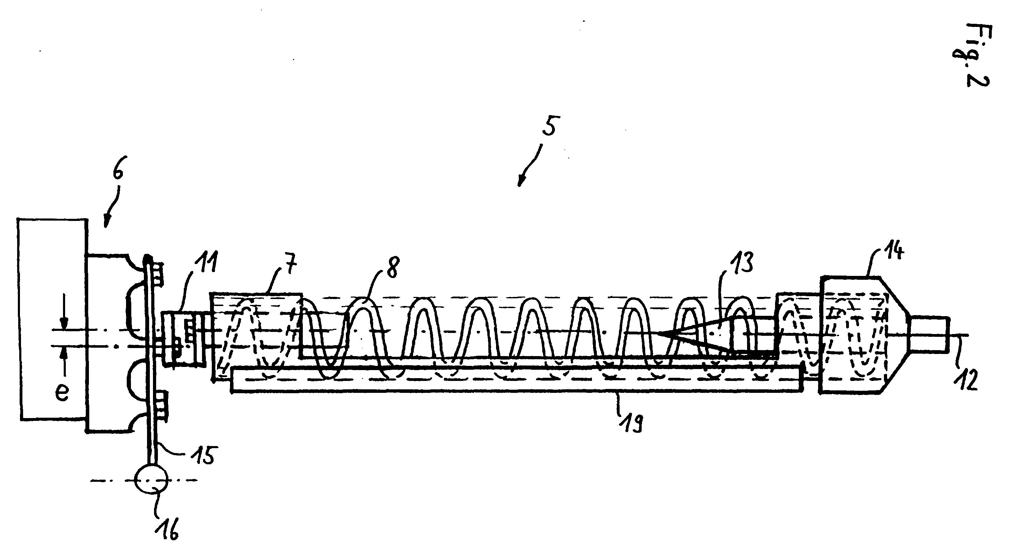

Nachfolgend sei anhand Fig. 2 die Fördereinrichtung 5 im einzelnen erläutert. Der als Getriebemotor ausgeführte Antrieb 6 ist über einen Kurbelzapfen 11 exzentrisch mit der innerhalb des Förderrohrs 7 angeordneten Förderspirale 8 verbunden, wobei eine Exzentrizität e zwischen der Längsachse 12 von Förderspirale bzw. Förderrohr und der Antriebswelle des Antriebs 6 besteht. Das Förderrohr 7 ist in der aus Fig. 2 ersichtlichen Weise im Bereich zwischen seinen Endabschnitten bis auf einen wannenartigen Bodenbereich ausgeschnitten, um den ungehinderten Zutritt von Schüttgut von oben her zu ermöglichen.

Die Förderspirale 8 besteht aus spiralförmig gewundenem, flachen Metallprofil. Am abgabeseitigen Endabschnitt der Fördereinrichtung 5 greift die Förderspirale auf einen feststehend angeordneten Dosierdorn 13, dessen Aufgabe darin besteht, einen allseitig umschlossenen Raum für das Schüttgut zu bilden, damit dieses am Ende der Förderstrecke eine gewisse Verdichtung (zwischen Dosierdorn, Förderspirale und Förderrohr) erfährt, was zu einer gleichmäßigeren Ausdosierung führt. Zusätzlich zu dieser Maßnahme kann abgabeseitig eine Pulvertülle 14 vorgesehen sein, die den Querschnitt des abgegebenen Schüttgutstroms nochmals verengt. Die z.B. aus Kunststoff bestehende Pulvertülle kann austauschbar sein und dadurch unterschiedliche Querschnittsverengungen vorgeben, die an unterschiedliches Fördergut und das damit verbundene Förderverhalten am Austritt angepaßt werden kann. Der Abgangsquerschnitt der Pulvertülle kann um ca. 5% bis 20% geringer dimensioniert sein als der Kreisringquerschnitt des Förderguts im Bereich von Dosierdorn und Förderrohr.

Das Auslauf- bzw. Abreißverhalten des Förderguts wird wesentlich durch die vorstehend beschriebenen Einbauten (Dosierdorn und Pulvertülle) mitbestimmt, wobei das Ziel darin besteht, einen möglichst immer gleichmäßigen, gleichartigen Abriß des Förderguts am Austritt zu erhalten. Dies wirkt sich auf Dosiergleichmäßigkeit und Dosiergenauigkeit des Förderguts vorteilhaft aus. Weiterhin tragen die genannten Einrichtungen zu einer Abdichtung der Fördereinrichtung durch das Fördergut selbst gegen Feuchtigkeit und sonstige Verunreinigungen bei, was somit einem Verkleben der Austrittsöffnung entgegenwirkt.

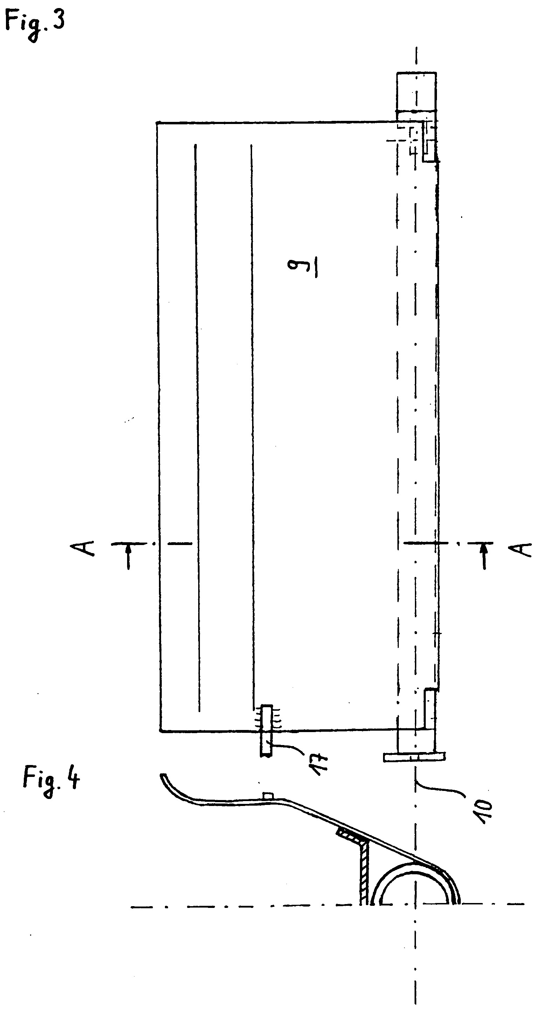

Das unterhalb der Fördereinrichtung 5 gelagerte Schlagelement bzw. Impulsblech 9 ist in Fig. 3 in seitlicher Draufsicht und in Fig. 4 in einer schematischen Schnittansicht im Halbschnitt dargestellt. Das im ganzen V-förmig ausgebildete Impuslblech umgreift mit seinen von der Schwenkachse 10 nach oben weisenden Schenkeln bzw. Schlagflächen den unteren Teil der Pulvertüte 2, wobei bei einer schwenkenden Hin- und Herbewegung des Impulsblechs um die Schwenkachse 10 ein Schlagimpuls auf die flexiblen Wände 4a bzw. 4b der Pulvertüte übertragen wird. Dies hat zur Folge, daß das innerhalb der Pulvertüte bevorratete Schüttgut bei einer Abförderung entlang des Förderrohrs 7 von oben nach unten nachfließt bzw. nachrutscht, d.h. däß das Schüttgut während des Fördervorgangs zeitweilig oder ständig in einer gewissen Fließbewegung gehalten wird. Einer teilweisen Verharrung des Schüttguts und einer etwaigen Brückenbildung wird dadurch entgegengewirkt. Der Antrieb des Impulsblechs erfolgt in der nachstehend erläuterten Weise.

Damit die Nachfließbewegung des Schüttguts auf die Abförderungsgeschwindigkeit abgestimmt ist, ist vorgesehen, den Antrieb der Fördereinrichtung mit der Bewegung des Impulsblechs zu koppeln. Hierzu ist zum einen vorgesehen, wie bereits im Zusammenhang mit Fig. 2 erwähnt, däß der Antriebsmotor 6 über einen Exzenter bzw. Kurbelzapfen 11 mit der Förderspirale verbunden ist. Der Antriebsmotor 6 ist fliegend gelagert, d.h. er führt bei einer Drehung seiner Ausgangswelle eine exzentrische Bewegung mit einem Radius e um die Längsachse 12 der Fördereinrichtung aus. Diese exzentrische Bewegung des Antriebsmotors wird zur Bewegung des Impulsblechs 9 ausgenutzt, indem am Gehäuse des Antriebsmotors ein Anlenkarm 15 (Fig. 1, Fig. 2) befestigt ist, der an seinem Ende ein Kugelgelenk 16 (Fig. 2) trägt, welches seinerseits gelenkig mit einem weiteren Arm 17 verbunden ist, der z.B. durch Schweißen fest am Impulsblech 9 fixiert ist.

Durch die beschriebene Anordnung wird in konstruktiv einfacher Weise eine gekoppelte Bewegung von Fördereinrichtung und Impulsblech erreicht. Alternativ sind selbstverständlich auch andere konstruktive Lösungen denkbar, beispielsweise eine zentrische Verbindung zwischen Antriebsmotor und Fördereinrichtung und ein Antrieb des Impulsblechs über einen eigenen Exzenter. Die vorstehend beschriebene Lösung besitzt jedoch den Vorteil, däß vergleichsweise wenige Lagerungen und Befestigungspunkte erforderlich sind. Weiterhin begünstigt die gewählte Anordnung eine vorteilhafte leichte Schlagbewegung (impulsartige Bewegung) des Schlagblechs 9 gegen die Wände der Pulvertüte, im Gegensatz zu einer "weicheren", sinusartigen Bewegung, die mit einem separaten Exzenterantrieb erreicht würde.

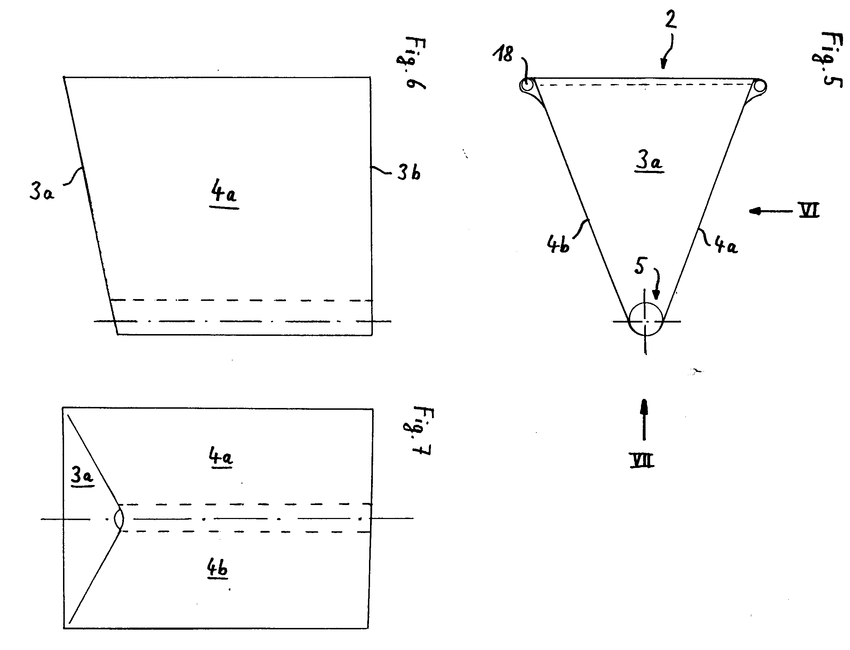

Die Pulvertüte 2 ist in verschiedenen Ansichten in Fig. 5 bis 7 dargestellt. Insbesondere aus Fig. 5, die eine stirnseitige Draufsicht zeigt, geht hervor, daß die Fördereinrichtung 5 am tiefsten Punkt der trogförmig ausgebildeten Pulvertüte 2 angeordnet ist. Die Pulvertüte 2 ist aus drei Bahnen textilen Materials zusammengenäht, nämlich aus einer V-förmig um die Fördereinrichtung 5 herumgeführten Bahn, die die Seitenwände 4a und 4b bildet, sowie aus zwei dreieckförmigen Materialbahnen, die die Stirnwände 3a und 3b bilden. Am rechteckigen oberen Rand der Pulvertüte 2 ist das textile Material um mit 18 angedeutete Streben herumgeführt, so daß die seitlichen Wände bzw. Stirnwände straff gespannt gehalten werden können. Zur Vermeidung von Schüttgutansammlungen im untersten Bereich zwischen Förderrohr und Pulvertüte ist ein im Querschnitt kreisbogenförmiges Klemmblech 19 (Fig. 2) vorgesehen, mit dem der unterste Bereich der Pulvertüte gegen das Förderrohr angedrückt wird.

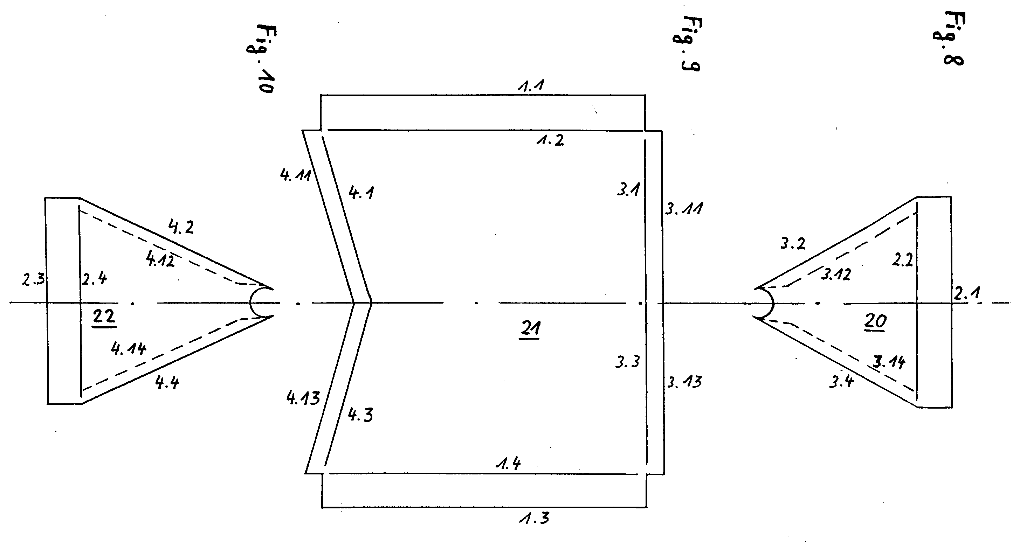

Um auf möglichst einfache Weise eine zuverlässige Abdichtung zwischen Fördereinrichtung bzw. Förderrohr an den endseitigen Durchführungen im Bereich der Stirnwände 3a und 3b zu erzielen, ist die Pulvertüte in der in Fig. 8 bis 10 erläuterten Weise hergestellt. Fig. 8 zeigt eine Draufsicht auf ein erstes Zuschnitteil 20, das die abgabeseitige Stirnwand 3b ergibt, Fig. 9 eine Draufsicht auf ein Zuschnitteil 21, das die beiden Seitenwände 4a und 4b ergibt, und Fig. 10 eine Draufsicht auf ein Zuschnitteil 23, das die antriebsseitige Stirnwand 3a ergibt.

Zur Aufnahme der Pulvertüte im Gehäuse 1 dienen die bereits genannten Streben 18, die durch die Pulvertüte hindurchgeführt werden. Hierzu wird im Zuschnitteil 21 die Kante 1.1 auf der Linie 1.2 und die Kante 1.3 auf der Linie 1.4 umgelegt und als "halben Saum" genäht.

Entsprechend wird im Zuschnitteil 20 die Kante 2.1 auf der Linie 2.2 und in Zuschnitteil 22 die Kante 2.3 auf der Linie 2.4 umgelegt und als "halben Saum" genäht.

Die Zuschnitteile 21 und 20 werden durch Nähte zusammengefügt, die sich aus der Linie 3.1 bzw. 3.3 und der Kante 3.2 bzw. 3.4 ergeben. Diese Nähte werden als "halbe Kappnähte" ausgeführt, so däß sich die Kante 3.11 bzw. 3.13 auf das Zuschnitteil 20 umlegt und vernäht wird. Die halbe Kappnaht läuft in der Spitze des Zuschnitts zum Rand (zur Kante 3.2 bzw. 3.4) aus, was mit den Linien 3.12 bzw. 3.14 angedeutet ist. Hierdurch legt sich die halbe Kappnaht nach innen einschlagend an das Förderrohr an, so daß eine Undurchlässigkeit gegenüber Schüttgut gewährleistet ist.

Die Zuschnitteile 21 und 22 werden durch Nähte zusammengefügt, die sich aus der Linie 4.1 bzw. 4.3 und der Kante 4.2 bzw. 4.4 ergeben. Diese Nähte werden als "halbe Kappnähte" ausgeführt, so däß sich die Kante 4.11 bzw. 4.13 auf das Zuschnitteil 22 umlegt und vernäht wird. Die halbe Kappnaht läuft in der Spitze des Zuschnitts zum Rand (zur Kante 4.2 bzw. 4.4) aus, was mit den Linien 4.12 bzw. 4.14 angedeutet ist. Hierdurch legt sich die halbe Kappnaht nach innen einschlagend an das Förderrohr an, so daß eine Undurchlässigkeit gegenüber Schüttgut gewährleistet ist.

Der runde Öffnungsquerschnitt unten in der Pulvertüte wird wird abschließend eingebracht, d.h. nach dem Vernähen. Der Öffnungsdurchmesser wird zunächst als Untermaß bezüglich des Außendurchmessers des Förderrohrs ausgeführt und wird während der Montage durch Einführen des Förderrohrs in die Pulvertüte aufgeweitet, wodurch ein dichter Abschluß erzielt wird.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Vorrichtung zum dosierten Zuführen von Schüttgut, mit einem Behälter (2) zum Aufnehmen des Schüttguts und einer in einem unteren Bereich des Behälters angeordneten Fördereinrichtung (5) zum dosierten Abgeben des Schüttguts, wobei zumindest ein Wandbereich (4a, 4b) des Behälters flexibel ausgebildet ist und das Schüttgut durch Schwerkraftwirkung in den Bereich der Fördereinrichtung gelangt, dadurch gekennzeichnet, däß der flexible Wandbereich (4a, 4b) aus einem straff gespannten Material besteht und mit einer Schlageinrichtung (9) in zeitlichen Abständen stoß- oder impulsartig bewegt wird.

2. Vorrichtung nach Anspruch 1, dadurch gekennzeichnet, daß zwei im wesentlichen einander gegenüberliegende Wände (4a, 4b) des Behälters (2) flexibel ausgebildet sind.

3. Vorrichtung nach Anspruch 1 oder 2, dadurch gekennzeichnet, daß die wenigstens eine flexible Wand des Behälters aus textilem Material besteht.

4. Vorrichtung nach einem der Ansprüche 1 bis 3, dadurch gekennzeichnet, daß alle Wände des Behälters aus textilem Material bestehen.

5. Vorrichtung nach einem der vorangehenden Ansprüche, dadurch gekennzeichnet, daß die Fördereinrichtung (5) eine in einer Rinne (7) angeordnete Förderspirale (8) aufweist.

6. Vorrichtung nach Anspruch 5, dadurch gekennzeichnet, daß die Förderspirale (8) aus einem ebenen, spiralförmig gewickelten Metallband besteht.

7. Vorrichtung nach Anspruch 5 oder 6, dadurch gekennzeichnet, daß im abgabeseitigen Endabschnitt der Förderspirale (8) ein feststehender Dosierdorn (13) angeordnet ist.

8. Vorrichtung nach Anspruch 7, dadurch gekennzeichnet, daß der Außendurchmesser des Dosierdorns dem Innendurchmesser der Förderspirale entspricht.

9. Vorrichtung nach einem der Ansprüche 5 bis 8, dadurch gekennzeichnet, daß sich an den abgabeseitigen Endabschnitt der Förderrinne eine Abgabetülle (14) anschließt.

10. Vorrichtung nach Anspruch 9, dadurch gekennzeichnet, daß die Abgabetülle in Abförderrichtung eine Querschnittsverengung aufweist.

11. Vorrichtung nach Anspruch 10, dadurch gekennzeichnet, daß der Ausgangsquerschnitt der Abgabetülle um 5% bis 20% geringer ist als der Kreisringquerschnitt der Förderspirale (8).

12. Vorrichtung nach einem der vorangehenden Ansprüche, dadurch gekennzeichnet, daß ein Antriebsmotor (6) sowohl zum Antrieb der Förderspirale (8) als auch zum Antrieb der Schlageinrichtung (9) dient.

13. Vorrichtung nach einem der vorangehenden Ansprüche, dadurch gekennzeichnet, daß der Behälter (2) trogförmig ausgebildet ist und zwei im wesentlichen senkrechte Stirnwände (3a, 3b) und zwei geneigte, flexible Seitenwände (4a, 4b) aufweist.

14. Vorrichtung nach Anspruch 13, dadurch gekennzeichnet, daß das Schlagelement (9) V-förmig ausgebildet ist und unterhalb des Behälters (2) schwenkbar gelagert ist, so daß die beiden Seitenwände (4a, 4b) beaufschlagt werden.

15. Vorrichtung nach einem der vorangehenden Ansprüche, dadurch gekennzeichnet, daß der Antriebsmotor (6) fliegend gelagert ist, wobei die Ausgangswelle des Motors parallel zur Achse (12) der Fördereinrichtung angeordnet ist und über einen Kurbelzapfen (11) exzentrisch mit der Fördereinrichtung verbunden ist, und der Antriebsmotor (6) über einen Gelenkarm (15) mit dem Schlagelement verbunden ist.

16. Vorrichtung nach einem der vorangehenden Ansprüche, dadurch gekennzeichnet, daß der Behälter aus einer die Seitenwände (4a, 4b) bildenden, im wesentlichen rechteckigen Materialbahn (21) und zwei die Stirnwände (3a, 3b) bildenden, im wesentlichen dreieckigen Materialbahnen (20,22) zusammengefügt ist.

17. Vorrichtung nach Anspruch 16, dadurch gekennzeichnet, daß die den Behälter bildenden Materialbahnen (20,21,22) die Endabschnitte des Förderrohrs (7) dicht umschließen.
